# EUROPÄISCHE PATENTSCHRIFT

(11) **EP 1 077 004 B1**
(45) Veröffentlichungstag und Bekanntmachung des Hinweises auf die Patenterteilung: **30.07.2008**
(21) Anmeldenummer: 99948645.9
(22) Anmeldetag: 04.05.1999
(51) Int. Cl.: H04Q 3/00

(54) **MANAGEMENT-KOMPONENTE EINES SIGNALISIERUNGSTRANSFERPUNKTES**
A MANAGEMENT COMPONENT OF A SIGNALLING TRANSFER POINT
COMPOSANTE DE GESTION D'UN POINT DE TRANSFERT DE SIGNALISATION

(30) Priorität: 08.05.1998 DE 19820689
(43) Veröffentlichungstag der Anmeldung: 21.02.2001
(73) Patentinhaber: Nokia Siemens Networks GmbH & Co. KG, 81541 München (DE)
(72) Erfinder: GRADISCHNIG, Klaus, D-82131 Gauting (DE); SCHWARZBAUER, Hanns, D-82194 Gröbenzell (DE)
(86) Internationale Anmeldenummer: PCT/DE1999/001336
(87) Internationale Veröffentlichungsnummer: WO 1999/066693

(56) Entgegenhaltungen:
- WO-A-95/01063
- CA-A- 2 153 281
- US-A- 5 282 244
- US-A- 5 581 610

## Beschreibung

Betreiber von Transferknoten im Zeichengabenetz Nr. 7 (signalling transfer points, STP) wollen sich einerseits vor unbefugter Benutzung schützen, d.h. die Benutzung des STP wird nur aufgrund gewisser Vereinbarungen zugelassen. Andererseits wollen diese Betreiber für die Benutzung des STP Gebühren verlangen.

Aus dem Dokument US-A-5 282 244 (Fuller et al.) ist die Durchführung der Funktionen "Screening" und "Messung" für Signalisierungsnachrichten bekannt.

In den Standards werden für die Durchführung dieser Funktionen bisher folgende Methoden angewendet:
a) In der Q.705, §8, wird MTP Screening auf der Basis OPC/DPC bzw. incoming linkset/DPC dadurch definiert, daß eine OPC/DPC-Matrix bzw incoming-linkset/DPC-Matrix die erlaubten bzw. verbotenen Verkehrsbeziehungen festlegt. Darüber hinaus gibt es zum Beispiel bei Bellcore (GR-82-CORE, Appendix C) darüber hinausgehende Anforderungen an das Screening in STP. Für dieses Screening ist von ITU kein Objektmodell definiert worden, was ein standardisiertes Management dieser Funktionen erschwert bzw. unmöglich macht.

In den Empfehlungen Q.752 und Q.751.3 werden Messungen (Zählungen) und dazugehöriges Objektmodell für die Vergebührung von STP Verkehr definiert. Man geht dabei von einem Kaskadierungsprinzip aus, bei dem der unmittelbar benachbarte Sender (Betreiber des benachbarten Knotens) dem Betreiber des STP Gebühren bezahlt. Der benachbarte Sender wird dabei anhand des incoming linkset identifiziert, wobei, wenn mehrere Nachbarknoten von demselben Betreiber betrieben werden, durchaus eine Gruppe von incoming linksets zu einem Konto zusammengefaßt werden können und der von ihnen stammende Verkehr nicht näher unterschieden werden muß.

Andererseits entstehen dem Betreiber des STP ggf. durch das Weiterleiten von Nachrichten an andere STP selbst Gebühren.

Diesem Umstand wird dadurch Rechnung getragen, daß der Betreiber des STP für unterschiedliche Ziele, welche durch den DPC in den transferierten Nachrichten identifiziert werden, ggf. unterschiedliche Gebühren verlangt. Normalerweise werden die möglichen DPC dazu in DPC-Gruppen eingeteilt und der von einem Nachbarbetreiber zu diesen DPC-Gruppen gesendete Verkehr getrennt gemessen wird, d.h. für jedes definierte Konto gibt es Unterkonten.

Die zitierten Empfehlungen gehen dabei davon aus, daß diese DPC-Gruppen für alle Nachbarbetreiber identisch sind, d.h. jedes Konto dieselben Unterkonten besitzt. Dies schließt natürlich nicht aus, daß in einem Postprocessing spezielle Unterkonten von unterscheidlichen Konten unterschiedlich vergebührt werden. Z.B. könnte für einen Nachbarbetrieber der auf einem bestimmten Unterkonto erfaßte Verkehr kostenlos sein, während ein anderer für den auf dem gleichen Unterkonto erfaßten Verkehr Gebühren zahlen muß. Diese Einschränkung auf identische Unterkonten ist zwar praktikabel und unter dem Gesichtspunkt einer effizienten Realisierung wünschenswert aber nicht zwingend notwendig und auch für die vorliegende Erfindung nicht von Bedeutung. Der Vollständigkeit ist noch zu erwähnen, daß die zitierten Empfehlungen auch Mesungen zur Verifikation von (zu zahlenden) Gebühren definieren.

Der Erfindung liegt die Aufgabe zugrunde, in einem STP die Vergebührung und das Screening auf eine einfache und dynamisch günstige Weise zu realisieren.

Diese Aufgabe wird durch eine Management-Komponente nach Anspruch 1 gelöst.

Im folgenden wird die Erfindung näher erläutert.

Die Erfindung beruht auf der Erkenntnis, daß Verkehr der vergebührt wird, oft in gleicher Weise gescreent werden soll. Diese Erkenntnis kann erfindungsgemäß auch auf einfache Weise realisierungstechnisch umgesetzt werden. Die vorliegende Erfindung verbindet MTP Vergebührung mit incoming linkset/DPC Screening derart, daß für jedes Konto und darin für jedes Unterkonto noch Festlegungen getroffen werden können, wie mit dem damit zu erfassenden Verkehr verfahren werden soll. Mögliche Verfahrensweisen sind z.B. zählen und weiterleiten (entspricht der bisherigen Vergebührung), zählen (messen) und verwerfen (entspricht incoming linkset/DPC Screening mit gleichzeitiger Messung des nicht erlaubten Verkehrs), weiterleiten, oder verwerfen.

Das in Q.751.3 enthaltene Objektmodell kann dazu mit wenigen Ergänzungen allomorph erweitert werden. Die geringen notwendigen Änderungen in der Q.751.3 spiegeln sich in der Realisierung dieser Art von incoming Linkset/DPC Screening wieder, wenn die Vergebührung bereits realisiert ist, wie z.B. in EWSD. Auch wird dadurch im Vergleich zur Vergebührung nur eine geringe zusätzliche dynamische Belastung erzeugt. Der wesentliche realisierungstechnische Aufwand besteht in der Verwaltung der Daten und der Bereitstellung der Zugriffsprozeduren, welche hier für Screening und Vergebührung (praktisch) identisch sind. Ähnliches gilt für den dynamischen Aufwand. Im Gegensatz dazu benötigt eine Implementierung strikt nach Q.705 wesentlichen zusätzlichen Aufwand.

Im folgenden wird eine beispielhafte **Modification des MTP Accounting Object Modells** in Q.751.3 zur Realisierung der vorliegenden Erfindung vorgestellt. Die vorgeschlagenen Ergänzungen sind kursiv und unterstrichen dargestellt.
**1)** Ergänzung der mtpAccountPackage
   mtpAccountPackage PACKAGE
   BEHAVIOUR mtpAccountPackageBehaviour BEHAVIOUR DEFINED AS
      "The mtpAccount managed object allows by means of the signLinkSetTpSet attribute to define a set (at least one) of signLinkSetTps which are leading to an adjacent operator and therefore their MSU traffic can be accounted/verified collectively. One signLinkSetTp must not be assigned tö more than one mtpAccountPackage instance within one mtpSignPoint. All signLinkSetTpSets of mtpAccounts with the same operatorName válue must be disjunct. The selectionItem in each of the entries of selectionGroupSet refers each to one instance of dpcGroup, the optionalSelectionItem can be used to refer one instance of siGroup. Each selectionGroup entry shall be unique in this attribute. *The optionalReactionItem can be used to specify the reaction if the selection criteria is met (e.g. "count", "discard", "count + discard", "pass", ...)*
      For each selectionGroup it is counted separately. Each counter information contains the number of MSUs, the number of octets and an eventual data problem. The counters are not readable but only available in the notification data.
      If all counters for verification or accounting should still be zero at the end of the measurement, the corresponding notification should be generated regardless of that in order to provide a measure against notification loss.
      Two different notifications, one for accounting, one for accounting verification containing the measurement results might be generated by this one object. If a selectionGroupSet is empty, then this means, that accounting resp. verification is not performed for the adjacent operator. In this case there is no notification for accounting resp. verification.";;
   ATTRIBUTES
      mtpAccountId GET SET-BY-CREATE,
      signLinkSetTpSet GET SET-BY-CREATE ADD-REMOVE,
      operatorName GET SET-BY-CREATE,
      controlPointer GET SET-BY-CREATE,
      selectionGroupSetForAccounting GET REPLACE ADD-REMOVE;
      selectionGroupSetForVerification GET REPLACE ADD-REMOVE;
   NOTIFICATIONS
      mtpAccounting,
      mtpAccountingVerification;
   REGISTERED AS {mtpAccountPackage-POi};
**2)** Keine Ergänzung des selectionGroupSetForAccounting Attributes
   selectionGroupSetForAccounting ATTRIBUTE
   WITH ATTRIBUTE SYNTAX AccountingDefinedTypesModule.SelectionGroupSet;
   MATCHES FOR EQUALITY;
   BEHAVIOUR selectionGroupSetForAccountingBehaviour BEHAVIOUR DEFINED AS "The selectionGroupSetForAccounting attribute refers to set of groups of object instances that are representing the items against which incoming SS7 traffic should be registered.";;
   REGISTERED AS {selectionGroupSetForAccounting-AOi};
   SelectionGroupSet ::= SET SIZE (0..maxNumberReferencesInSelectionGroupSet) OF SelectionGroup
**3)** Erforderliche Ergänzung des selectionGroup Typs

```
 SelectionGroup ::= SEQUENCE
       {
       selectionltem                      [0] ObjectInstance,
       optionalSelectionItem        [1] ObjeetInstance OPTIONAL2
       optionalReactionItem        [2] ReactionTrpe OPTIONAL
       }
```

**4)** Beispiel für Definition des ReactionType Typs

```
 ReactionType ::= ENUMERATED
       {
       passOn               (0),
       count                (1),
       discard              (2),
       chargeAndDiscard     (3),
        ...}
```

oder

```
 ReactionType ::= BITSTRING
       {
       count               (0),
       discard             (1)
       - the reaction is activated, if the corresponding bit is set
       }
```

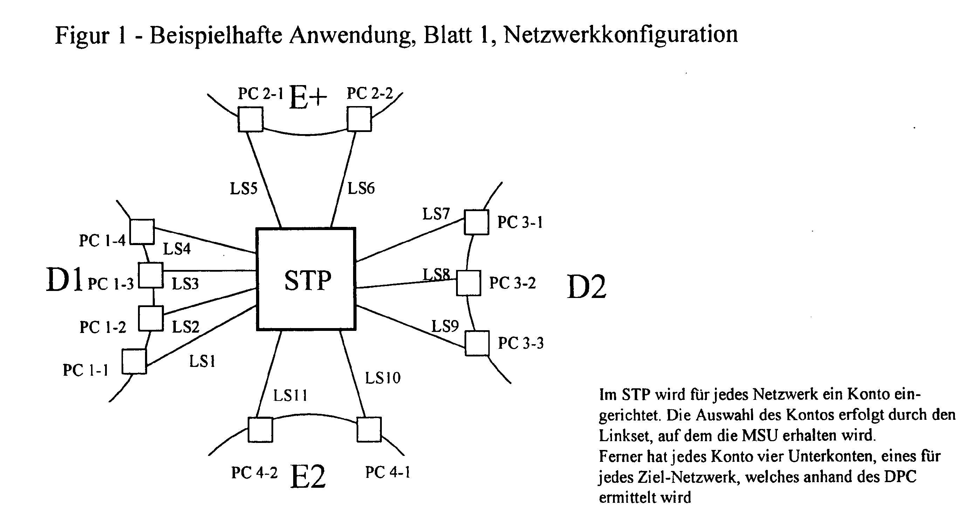

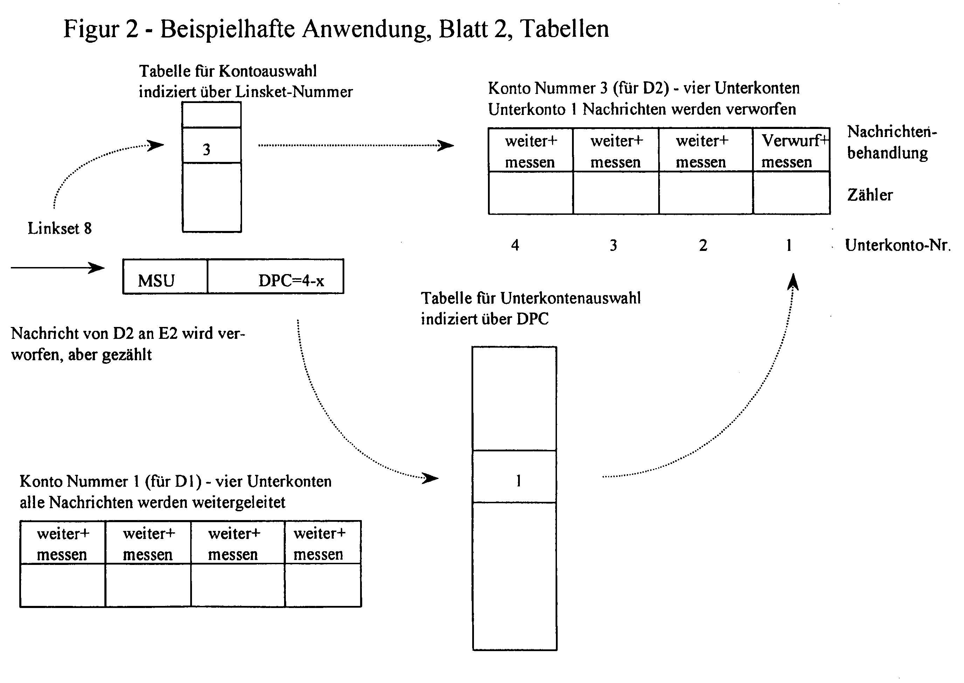

Die Figuren 1 und 2 zeigen eine beispielhafte Anwendung, bei dem ein Betreiber (z.B. D1) mehreren anderen Netzbetreibern (z.B. D2, E+, E2) Internetwork-STP Dienste anbietet. Dabei soll D1 mit allen anderen Netzen, D2 mit D1 und E+, E+ mit D1 und D2, und E2 nur mit D1 interworken können. Der dabei weitergeleitete Verkehr soll auch in Abhängigkeit vom Zielnetzwerk vergebührt werden.

## Patentansprüche

1. Management-Komponente eines Signalisierungspunktes, über die
- Gruppen, denen ankommende Nachrichten von dem Signalisierungspunkt zugeordnet werden, definiert werden, wobei Nachrichten einer Gruppe von dem Signalisierungspunkt jeweils auf diesselbe Art und Weise behandelt werden, und wobei eine Gruppe durch bestimmte Auswahlmerkmale definiert wird, die eine Nachricht erfüllen muß, um dieser Gruppe zugeordnet zu werden,
- die Art und Weise festgelegt wird, nach der eine Nachricht einer Gruppe vom Signalisierungspunkt behandelt werden soll,
**dadurch gekennzeichnet, daß**
- die genannte Festlegung über die Art und Weise der Behandlung einer Nachricht einer Gruppe sowohl das Messen des Verkehrs als auch das Screening umfaßt.

2. Management-Komponente nach Anspruch 1,
**dadurch gekennzeichnet, daß**
es sich bei den Auswahlmerkmalen, die eine Nachricht einer Gruppe erfüllen muß, zum einen um eine Linkset-Menge handelt, über die die Nachricht ankommen muß und zum anderen um mindestens eine DPC-Menge handelt, der der DPC der Nachricht angehören muß.

3. Management-Komponente nach Anspruch 1 oder 2,
**dadurch gekennzeichnet, daß**
die Management-Komponente pro Operator, der von dem Signalisierungstransferpunkt unterstützt wird, jeweils ein Mal vorhanden ist.

4. Management-Komponente nach einem der Ansprüche 1 bis 3,
**dadurch gekennzeichnet, daß**
die Management-Komponente nach dem MTP-Account-Model von ITU Q.751.3 ausgebildet ist, das hierzu um ein entsprechendes ReactionItem für das Screening erweitert ist.

5. Signalisierungspunkt, mit
- einer Zuordnungs-Komponente, die eine ankommende Nachricht aufgrund ihrer Merkmale einer bestimmten Gruppe von Nachrichten zuordnet,
- einer Behandlungs-Komponente, die die Nachrichten einer Gruppe jeweils auf diesselbe Art und Weise behandelt,
- einer Management-Komponente, über die für die Zuordnungs-Komponente festgelegt werden kann, durch welche Merkmale eine Gruppe definiert ist, und zum anderen für die Behandlungs-Komponente die Art und Weise festgelegt werden kann, nach der eine Nachricht einer Gruppe behandelt werden soll,
**dadurch gekennzeichnet, daß**
- die Festlegung über die Art und Weise der Behandlung einer Nachricht einer Gruppe sowohl das Messen des Verkehrs als auch das Screening umfaßt.

6. Verfahren zur Behandlung einer Nachricht in einem Signalisierungspunkt, demgemäß
- von einer Zuordnungs-Komponente eine ankommende Nachricht aufgrund ihrer Merkmale einer bestimmten Gruppe von Nachrichten zugeordnet wird,
- von einer Behandlungs-Komponente die Nachrichten einer Gruppe jeweils auf diesselbe Art und Weise behandelt werden,
- über eine Management-Komponente für die Zuordnungs-Komponente festgelegt wird, durch welche Merkmale eine Gruppe definiert ist, und zum anderen für die Behandlungs-Komponente die Art und Weise festgelegt wird, nach der eine Nachricht einer Gruppe behandelt werden soll,
**dadurch gekennzeichnet, daß**
- die Festlegung über die Art und Weise der Behandlung einer Nachricht einer Gruppe sowohl das Messen des Verkehrs als auch das Screening umfaßt.

## Claims

1. Management component for a signaling point, which is used
- to define groups which are assigned incoming messages by the signaling point, wherein messages in a group are each handled in the same way by the signaling point, and wherein a group is defined by determined selection features which a message needs to satisfy in order to be assigned to this group,
- to stipulate the way in which a message in a group needs to be handled by the signaling point,
**characterized in that**
- said stipulation about the way in which a message in a group is handled covers both measurement of the traffic and screening.

2. Management component according to claim 1,
**characterized in that**
the selection features which a message in a group needs to satisfy are firstly a linkset set via which the message needs to arrive and secondly at least one DPC set to which the message's DPC needs to belong.

3. Management component according to claim 1 or 2,
**characterized in that**
the management component is respectively present once per operator which is supported by the signaling transfer point.

4. Management component according to one of claims 1 to 3,
**characterized in that**
the management component is produced on the basis of the MTP account model from ITU Q.751.3 which, to this end, is extended by an appropriate ReactionItem for the screening.

5. Signaling point, having
- an assignment component which assigns an incoming message to a particular group of messages on the basis of its features,
- a handling component which handles each of the messages in a group in the same way,
- a management component which can be used to stipulate for the assignment component which features define a group and secondly to stipulate for the handling component the way in which a message in a group needs to be handled,
**characterized in that**
- the stipulation about the way in which a message in a group is handled covers both measurement of the traffic and screening.

6. Method for handling a message in a signaling point, according to which
- an assignment component assigns an incoming message to a particular group of messages on the basis of its features,
- a handling component handles each of the messages in a group in the same way,
- a management component is used to stipulate for the assignment component which features define a group and secondly to stipulate for the handling component the way in which a message in a group needs to be handled,
**characterized in that**
- the stipulation about the way in which a message in a group is handled covers both measurement of the traffic and screening.

## Revendications

1. Composante de gestion d'un point de signalisation, par le biais de laquelle
- des groupes auxquels des messages entrants sont affectés par le point de signalisation sont définis, des messages d'un groupe étant traités à chaque fois de manière identique par le point de signalisation et un groupe étant défini par des caractéristiques de sélection déterminées qu'un message doit remplir pour être affecté à ce groupe,
- la manière dont un message d'un groupe doit être traité par le point de signalisation est fixée,
**caractérisée en ce que**
- la fixation mentionnée de la manière de traiter un message d'un groupe comprend non seulement la mesure du trafic, mais également le tri.

2. Composante de gestion selon la revendication 1,
**caractérisée en ce qu'**il s'agit, concernant les caractéristiques de sélection qu'un message d'un groupe doit remplir, d'une part d'un ensemble de liaisons sur lesquelles le message doit arriver et d'autre part d'au moins un ensemble de DPC auquel doit appartenir le DPC du message.

3. Composante de gestion selon la revendication 1 ou 2, **caractérisée en ce que** la composante de gestion est présente à chaque fois une fois pour chaque opérateur supporté par le point de transfert de signalisation.

4. Composante de gestion selon l'une des revendications 1 à 3, **caractérisée en ce que** la composante de gestion est réalisée selon le modèle MTP-Account de la recommandation Q.751.3 de l'UIT auquel on ajoute, à cet effet, un ReactionItem correspondant pour le tri.

5. Point de signalisation, comprenant
- une composante d'affectation qui affecte un message entrant à un groupe de messages déterminé sur la base de ses caractéristiques,
- une composante de traitement qui traite les messages d'un groupe de manière identique à chaque fois,
- une composante de gestion par le biais de laquelle on peut fixer, pour la composante d'affectation, quelles sont les caractéristiques qui définissent un groupe et on peut fixer d'autre part, pour la composante de traitement, la manière dont un message d'un groupe doit être traité,
**caractérisé en ce que**
- la fixation mentionnée de la manière de traiter un message d'un groupe comprend non seulement la mesure du trafic, mais également le tri.

6. Procédé de traitement d'un message dans un point de signalisation, selon lequel
- un message entrant est affecté à un groupe de messages déterminé par une composante d'affectation sur la base de ses caractéristiques,
- les messages d'un groupe sont traités de manière identique à chaque fois par une composante de traitement,
- on fixe pour la composante d'affectation, par le biais d'une composante de gestion, quelles sont les caractéristiques qui définissent un groupe et on fixe d'autre part, pour la composante de traitement, la manière dont un message d'un groupe doit être traité,
**caractérisé en ce que**
- la fixation de la manière de traiter un message d'un groupe comprend non seulement la mesure du trafic, mais également le tri.
